# EUROPEAN PATENT APPLICATION

(11) **EP 4 179 872 A1**
(43) Date of publication of application: **17.05.2023**
(21) Application number: 22382667.8
(22) Date of filing: 14.07.2022
(51) Int. Cl.: A01K 29/00

(54) **WEARABLE DEVICE WORN BY AN ANIMAL AND KIT COMPRISING THE DEVICE**

(30) Priority: 11.11.2021 ES 202132240 U
(71) Applicant: Digitanimal, S.L., 28830 Madrid (ES)
(72) Inventor: Callejero Andrés, Carlos, Madrid (ES); Gómez Maqueda, Ignacio, Madrid (ES); Blanco Carrera, Rubén, Madrid (ES)
(74) Representative: Balder IP Law, S.L.

(57) **Abstract**

The present invention relates to a wearable device worn by an animal, the device comprising a protective casing (1) for an electronic component (5), the casing (1) comprising a base (2) and a cover (3) that can be coupled to the base (2), the casing (1) defining a first compartment (6) adapted to house the electronic component (5), the first compartment (6) being delimited by the base (2) and by the cover (3) and the first compartment (6) being closed to the outside of the casing (1); the base (2) comprising an outer surface adapted to remain in contact with an animal's neck when the device is worn; the casing (1) comprising holes (81, 82) for the passage of a strap; the device comprising a second compartment (7) for housing a battery and in that the casing (1) comprises a lid (4) of the second compartment (7) that can be detachably coupled to the base (2) and/or to the cover (3) such that the coupling of the lid (4) causes the closure of the second compartment (7) to the outside of the casing (1). And a kit with the device and a strap for attaching the device to an animal's neck.

## Description

### TECHNICAL FIELD

The present invention belongs to the technical field of wearable devices worn by an animal.

### BACKGROUND

There is a need to extensively locate and monitor livestock. One way of extensively locating and monitoring livestock consists of attaching electronics to an animal that are capable of locating the animal and obtaining the parameters to be monitored. These electronics can be powered by a battery that is also attached to the animal.

In these cases, the electronics and the battery must be protected from the animal's environment, for example, from inclement weather, blows, etc.

A wearable device worn by an animal is already known, the device comprising a protective casing for an electronic component, the casing comprising a base and a base cover, the casing defining a first compartment suitable to house the electronic component, the first compartment being delimited by the base and by the cover and the first compartment being closed to the outside of the casing; the base comprising an outer surface suitable to remain in contact with an animal's neck when the device is worn; the casing comprising holes for the passage of a strap.

It is desirable for the battery powering the electronics to last as long as possible because changing the battery is not easy. In particular, it is difficult to change the battery because it requires finding the animal, removing the device from the animal, disassembling the device, changing the battery, reassembling the device, and reattaching the device to the animal. Therefore, it is desirable for the battery life to be sufficient. However, increased battery life comes with increased battery size and weight, which undesirably increases the weight carried by the animal and undesirably limits the movements the animal can make.

### GENERAL DESCRIPTION OF THE INVENTION

The present invention aims to solve problems that offer solutions for the state of the art such as those mentioned above.

Thus, a first aspect of the present invention relates to a wearable device worn by an animal, the device comprising a protective casing for an electronic component, the casing comprising a base and a cover that can be coupled to the base, the casing defining a first compartment adapted to house the electronic component, the first compartment being delimited by the base and by the cover and the first compartment being closed to the outside of the casing; the base comprising an outer surface adapted to remain in contact with an animal's neck when the device is worn; the casing comprising holes for the passage of a strap; the casing comprising a second compartment for housing a battery; the casing comprising a lid of the second compartment that can be detachably coupled to the base and/or to the cover such that the coupling of the lid causes the closure of the second compartment to the outside of the casing.

This device makes it possible for a user to easily access the inside of the second compartment. Therefore, to make the second compartment user-accessible, for example, to change a battery, detaching the lid from the casing is enough.

The expression "the first compartment being closed to the outside of the casing" is used in the sense that the first compartment is not communicated with the outside of the casing. Thus, in the event of rain, the casing prevents water from penetrating from outside the casing into the first compartment.

In some embodiments, the casing with coupled lid closes the first compartment to the outside of the casing.

In other embodiments, the lid does not need to be coupled for the first compartment to be closed to the outside of the casing, since the first compartment is closed to the second compartment. In other words, the first compartment is closed to the outside of the casing both when the lid is coupled to the casing and when the lid is detached from the casing.

In some embodiments, the holes for the passage of a strap have a section of at least 1 cm² and at most 14 cm². In some embodiments, said section of some of the holes for the passage of a strap is rectangular or U-shaped and said section of some other holes for the passage of a strap is U-shaped or rectangular.

In some embodiments, an outer surface of the cover is between the holes; the holes being closer to the outer surface of the base than to the outer surface of the cover. In this way, the outer surface of the cover is raised with respect to the holes for the passage of a strap, enabling the surface to be used as a support surface for a strap inserted in the holes, thus making it possible to increase the attachment force exerted by the strap on the device.

In some embodiments, the first compartment is closed to the second compartment. In these embodiments, a user can access the second compartment without needing to open the first compartment to the outside of the casing. In this way, if the first compartment comprises an electronic component, this electronic component is protected from, for example, blows, inclement weather or mud while the lid is detached from the casing. Therefore, the protection of the device is increased while accessing the second compartment. Logically, to obtain certain protection, it is not necessary for the first compartment to be closed to the second compartment, but rather it is enough to introduce a separator between the first compartment and the second compartment.

In some embodiments, the second compartment is between the outer surface of the base and the first compartment. These embodiments allow the first compartment to be located closer to the outer surface of the cover, i.e., closer to an outer surface of the casing that is in contact with the outside environment, when the device is worn by an animal. This facilitates wireless connection for the transmission of data and instructions between electronic apparatuses located in the first compartment and electronic apparatuses far from the animal, such as the wireless connection between a GPS receiver located in the first compartment and a satellite.

In some embodiments, the lid can be detachably coupled to the outer surface of the base; the second compartment being delimited by the base and by the lid. In this way, a user can access the inside of the second compartment by removing the device from an animal's neck and detaching the lid from the base. In other words, in those cases in which a strap is in contact with an outer surface of the cover, it is not necessary to separate the strap with respect to the casing in order to gain access to the inside of the second compartment.

In some embodiments, the device comprises at least one electronic component housed in the first compartment.

In some embodiments, the device comprises a battery for powering the at least one electronic component; the battery being housed in the second compartment.

In some embodiments, the device comprises a power connector for the at least one electronic component, the connector being inside the second compartment and the connector being electrically connected to the at least one electronic component. This makes it easier to change the battery, since it allows the battery to be easily connected to the electronic component, since the connector becomes accessible to the user after detaching the lid from the casing.

In some embodiments, the electronic component comprises a sensor for measuring one or more physical magnitudes of the animal. When the animal wears the device, the sensor for measuring one or more physical magnitudes of the animal is attached to the animal, allowing the one or more measured physical magnitudes to be monitored. In some embodiments, at least one electronic component comprises a processor and a storage unit. In some of these embodiments, the processor is configured to store sensor measurements in the storage unit.

In some embodiments, the sensor comprises a component sensitive to a physical magnitude measurable by the sensor; the sensing component being connected to a contact in such a way that the contact transmits the physical magnitude to the sensing component; the contact being on the outer surface of the base. In this way, when the animal wears the device, the contact comes in contact with the animal's neck to receive the physical magnitude of the animal, since the base is in contact with the animal's neck. Moreover, in some embodiments, the cover and/or the base isolate the sensing component and/or the contact from the environment, so as to improve reception, by the sensing component, of certain physical magnitudes, such as the animal's temperature, which could be altered by a physical magnitude of the environment, such as the temperature of the environment.

In some embodiments, the electronic component is electrically and/or electronically connected to a sensor; the sensor comprising a component sensitive to a physical magnitude measurable by the sensor; the sensing component comprising a contact on the outer surface of the base. In this way, when the animal wears the device, the contact comes in contact with the animal's neck to receive the physical magnitude of the animal, since the base is in contact with the animal's neck. Moreover, in some embodiments, the cover and/or the base isolate the sensing component and/or the contact from the environment, so as to improve reception, by the sensing component, of certain physical magnitudes, such as the animal's temperature, which could be altered by a physical magnitude of the environment, such as the temperature of the environment.

In some of the embodiments where the contact is on the outer surface of the base, the device is configured to make the contact and the animal's neck come into contact by attaching the device to the animal.

In some embodiments, the physical magnitude is temperature. In these embodiments where the contact is also on the outer surface of the base, the device allows for a relatively precise measurement of the temperature since it achieves high attachment pressure between the contact and the animal's neck.

In some embodiments, the casing comprises a device orientation indicator; the indicator being on an outer surface of the casing. The indicator makes it easier to use the electronics comprising the device because it makes it easier to place the device on the animal's neck in such a way that the orientation of the device is favourable for the operation of the electronic component. For example, in the event that the electronic component comprises a wireless communications module for transmitting and receiving data, the fact that the module is oriented so that it emits and/or receives radiation towards and/or from above the animal, rather than towards and/or from below the animal, particularly when the animal lowers its head, for example, to graze, favours the operation of the module.

In some embodiments, the electronic component comprises a wireless communications module for transmitting and receiving data. In some embodiments, the electronic component comprises a processor configured to transmit a measure of the physical magnitude measured by the sensor via the wireless communications module. This allows the measurement of the physical magnitude to be received by another wireless communications module configured to receive the physical magnitude. In this way it is possible to know the measurement of the physical magnitude remotely with respect to the wearable device worn by an animal, and without needing to open the wearable device worn by an animal.

In some embodiments, the electronic component comprises a positioning apparatus configured to determine the position of the positioning apparatus via satellites and/or wireless communications. In some embodiments, the electronic component comprises a processor configured to transmit a position determined by the positioning apparatus. This allows the position to be received by another wireless communications module configured to receive the position. In this way it is possible to know the position remotely with respect to the wearable device worn by an animal, and without needing to open the wearable device worn by an animal.

In order to reduce energy consumption and the complexity of monitoring devices, thus being able to minimise maintenance tasks of the device and make its manufacture more affordable, in order to know the location of the animal at different times, the wearable device worn by an animal preferably does not include a positioning device and uses the wireless communications module of the device to determine the position of the wearable device worn by an animal. This is because, in some embodiments, transmission from the communications module of the device only reaches the respective receiver when there is sufficient proximity between the device and the receiver. Furthermore, a processor may be configured to process the power of the signal received by the receiver to estimate a position of the device that transmitted the signal.

In some embodiments, the electronic component comprises one or more inertial measurement sensors and the electronic component comprises a processor configured to determine the position of the wearable device worn by an animal via the one or more inertial measurement sensors; and/or the electronic component comprises a processor configured to determine the position of the wearable device worn by an animal via position triangulation based on the wireless communications received and/or transmitted with the wireless communications module of the device.

In some embodiments, the holes are closer to ends of the base than to a central area of the base.

In some embodiments, the contact is between a central area of the outer surface of the base and one of the holes. This location of the contact allows a larger surface of the contact to be in contact with the animal's neck and/or allows for greater contact pressure between the contact and the animal's neck, since the passage of the strap through the hole achieves higher pressure in this location than in other locations on the base, such as the central area of the base, for example. Therefore, these embodiments make it easier to obtain a more reliable measurement of the physical magnitude of the animal. In some of these embodiments, the contact is between the central area of the base and a hole, the device being suitable to place the hole, when the device is worn by an animal, on an upper half of an animal's neck. In some of these embodiments, the device orientation indicator indicates a direction and sense that goes from the contact towards a hole for the passage of a strap, the contact being between the central area of the device and the hole.

In some embodiments, the casing comprises projections on the outer surface of the cover. The projections make it possible to increase the grip between the cover and a strap, the strap being inserted in the holes and the strap pressing on the outer surface of the cover. In this way, it is possible to minimise slippage between the strap and the cover when the device is worn by an animal. In some of these embodiments, some of the projections are between one of the holes for the passage of a strap and a central area of the cover, and other projections are between another one of the holes for the passage of a strap and the central area of the cover, said holes being in opposite locations on the casing. In some embodiments, these projections protrude by at least 2.0 mm and at most 10.0 mm, preferably at least 2.5 mm and at most 7.5 mm.

In some embodiments, the device comprises a tab on a wall of the hole, the tab defining a central area of the hole, the central area being thinner than the thickness of the hole at ends of the hole. The tab makes it possible to increase the grip between the casing and a strap, when a strap is inserted in the holes. In this way, it is possible to minimise slippage between the strap and the casing when the device is worn by an animal.

In some embodiments, the tab is a continuation of the outer surface of the cover.

In some embodiments, the device comprises projections adjacent to a wall of a hole that is opposite the wall of the same hole where the tab is located; the projections being oriented in a sense of an imaginary straight line that extends from a point on the outer surface of the cover to a point on the outer surface of the base. These projections make it possible to increase the grip between the casing and a strap, when a strap is inserted in the holes. In this way, it is possible to minimise slippage between the strap and the casing when the device is worn by an animal. Moreover, the combined action of the tab with these projections makes it possible to greatly increase the grip. In some embodiments, these projections protrude by at least 2.0 mm and at most 10.0 mm, preferably at least 2.5 mm and at most 7.5 mm.

In some embodiments, the cover has a C-shaped cross section. The curvature of the C-shape improves the resistance of the cover to blows, since it does not comprise a specific edge where the force of the blow can be easily concentrated, allowing the stresses derived from the blow to be distributed more evenly throughout the cover.

In some embodiments, the outer surface of the base is C-shaped. In general, this shape better adapts to the outer surface of an animal's neck.

In some embodiments, the C-shaped curvature of the cross section of the cover is greater than the C-shaped curvature of the outer surface of the base. This makes it possible to maximise the usability of the volume of the first compartment and/or the second compartment, given a total volume occupied by the casing.

In some embodiments, the device comprises one or more sealing gaskets, for example, a sealing gasket arranged between the base and the cover, and/or in the second compartment where the lid is received. In this way, the useful life of the device, the electronic component and/or the battery can be extended by preventing water from entering therein.

A second aspect of the present invention relates to a kit comprising the wearable device worn by an animal and a strap for attaching the device to an animal's neck, wherein the strap is inserted in the holes of the device. This kit allows the device to be worn by an animal by placing the strap on the animal's neck and pressing the strap against the animal's neck.

In some embodiments, the kit comprises a counterweight coupled to the strap, the mass of the counterweight being greater than the mass of the device; in some embodiments, the mass of the counterweight is greater than twice the mass of the device. The counterweight increases the stability of the position of the device attached to the animal with respect to the animal's neck, since the counterweight minimises dragging of the strap caused by the weight of the device and which tends to move the device towards a lower portion of the animal's neck.

In some embodiments, the kit comprises a buckle coupled to the strap.

The different aspects and embodiments of the invention defined above may be combined together, provided that they are mutually compatible.

Additional advantages and features of the invention will become apparent from the detailed description that follows and will be particularly indicated in the attached claims.

### BRIEF DESCRIPTION OF THE FIGURES

To help make the features of the invention more readily understandable, according to practical exemplary embodiments thereof, said description is accompanied by a set of drawings constituting an integral part thereof, which by way of illustration and not limitation represent the following:
Figure 1 is a perspective view of a device according to some embodiments of the invention.
Figure 2 is a bottom view of a device according to some embodiments of the invention.
Figure 3 is a perspective view of a device according to some embodiments of the invention without the lid of the second compartment.
Figure 4 is a perspective view of a base of a device according to some embodiments of the invention.
Figure 5 is a side view of a base of a device according to some embodiments of the invention.
Figure 6 is a top view of a base of a device according to some embodiments of the invention.
Figure 7 is a perspective view of a lid of a device according to some embodiments of the invention.
Figure 8 is a bottom view of a lid of a device according to some embodiments of the invention.
Figure 9 is a perspective view of a cover of a device according to some embodiments of the invention.
Figure 10 is a side view of a device according to some embodiments of the invention.
Figure 11 is a top view of a device according to some embodiments of the invention.
Figure 12 is a perspective view of a kit according to some embodiments of the invention.
Figure 13 is a side view of an animal with a kit according to some embodiments of the invention.

### DESCRIPTION OF EMBODIMENTS OF THE INVENTION

In light of this description and figures, the person skilled in the art may understand that the invention has been described according to some preferred embodiments thereof, but that multiple variations may be introduced in said preferred embodiments without departing from the object of the invention as claimed.

The term "a(n)" refers to "at least one", unless expressly stated otherwise. Thus, for example, the phrase "an apparatus" means one or more apparatuses, unless expressly stated otherwise.

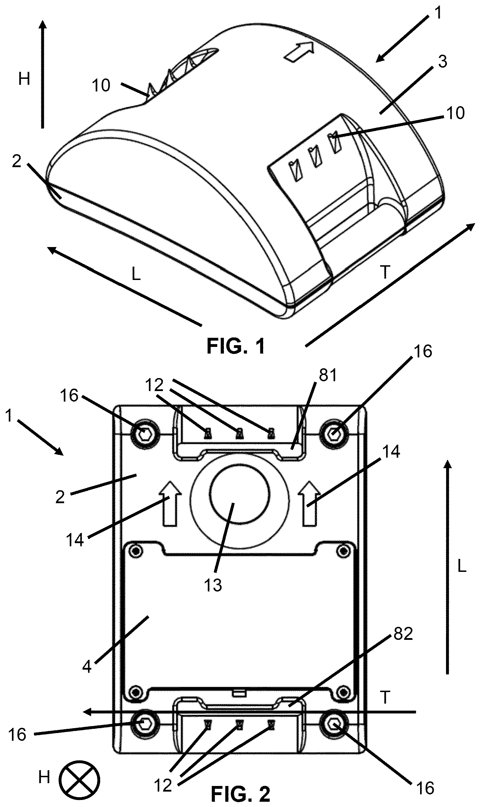

As shown in Figures 1, 2, 10 and 11, the device comprises a casing 1. As shown in Figures 1, 2 and 10, the casing 1 comprises a base 2. As shown in Figures 1, 10 and 11, the casing 1 comprises a cover 3 of the base 2. As shown in Figure 2, the casing 1 comprises holes 81, 82 for the passage of a strap. The holes 81, 82 are arranged in opposite locations on the casing 1.

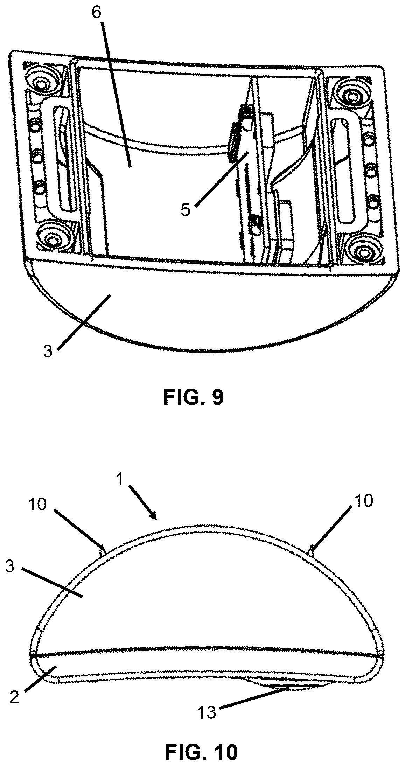

The casing 1 defines a first compartment 6 shown in Figure 9. The first compartment 6 is adapted to house an electronic component 5, for example a printed circuit board (PCB) that integrates several electronic subcomponents. For example, the first compartment 6 comprises attachment means for the electronic component 5, such as a guide adapted to insert the electronic component 5 therein. These attachment means make it possible to minimise movements of the electronic component 5 inside the first compartment 6.

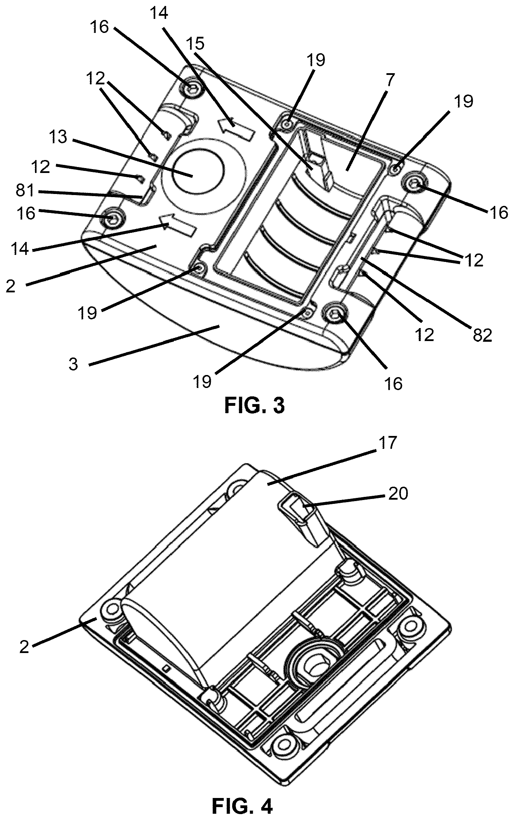

As can be deduced from Figures 4, 9 and 10, for example, the upper portion of the first compartment 6 is delimited by the cover 3 and the lower portion of the first compartment 6 is delimited by the base 2. As can be deduced from Figures 1, 2 and 9, the first compartment 6 is closed to the outside of the casing 1.

By coupling the cover 3 to the base 2, the cover 3 protects the upper portion of the electronic component 5 and the base 2 protects the lower portion of the electronic component 5. The base 2 and the cover 3 can be coupled by coupling means that allow detachable coupling between the base 2 and the cover 3, or by non-detachable coupling means between the base 2 and the cover 3, such as, for example, welding between the base 2 and the cover 3. As shown in Figures 2, 3, 4 and 9, the coupling means may comprise screws 16 that mechanically connect the base 2 and the cover 3; these screws 16 being inserted in holes in the base 2 and the cover 3.

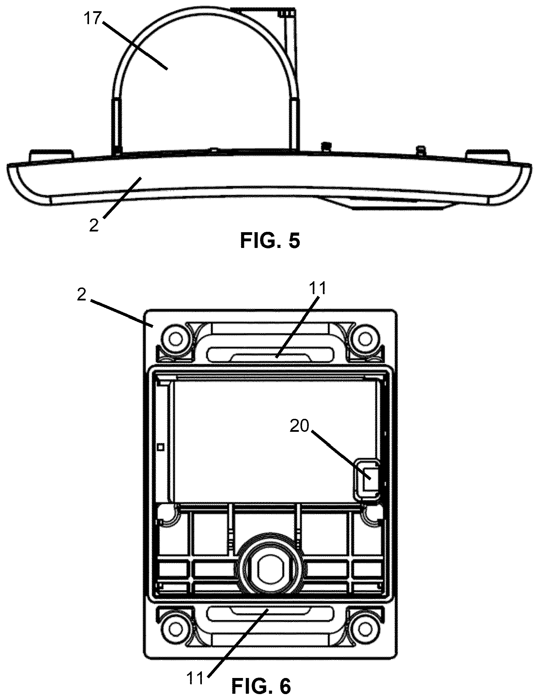

As shown in Figures 2 and 3, the base 2 has an outer surface at a lower end of the casing 1. This outer surface is not covered by the cover 3. The outer surface of the base 2 is adapted to remain in contact with an animal's neck when the device is worn by the animal. As can be seen in Figures 5 and 10, the outer surface of the base 2 can have a C-shaped section to facilitate better coupling to an animal's neck. In other embodiments of the invention (not shown), the outer surface of the base 2 does not have a C-shaped section, the outer surface of the base 2 being flat, for example.

As shown in Figures 4 and 5, the base 2 comprises a second compartment 7 and an elevation 17. As can be deduced from Figures 3, 4 and 5, the elevation 17 separates the first compartment 6 from the second compartment 7. As can be deduced from Figures 3, 4, 5 and 6, the elevation 17 closes the second compartment 7 to the first compartment 6, except for an opening 20 in the elevation 17. The second compartment 7 at least partially houses a power connector 15 for the electronic component 5, the connector 15 being electrically connected to the electronic component 5. The elevation 17 comprises an opening 20 through which the connector 15 is electrically connected to the electronic component 5. Preferably, the opening 20 is adapted to close the first compartment 6 to the second compartment 7 when the connector 15 is inserted, at least partially, in the opening 20.

As can be deduced from Figures 2, 3, 4, 5 and 9, the second compartment 7 is between the outer surface of the base 2 and the first compartment 6, the second compartment 7 being delimited by the elevation 17 of the base 2 and by a lid 4.

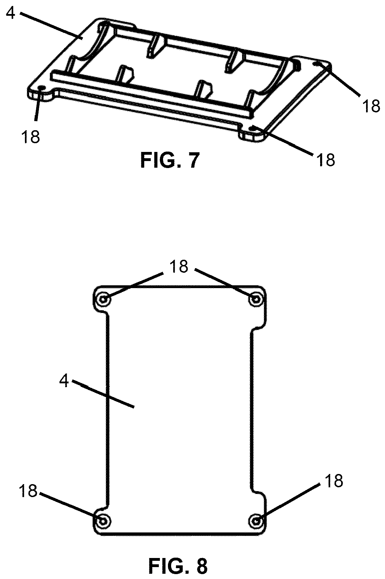

Figures 2, 7 and 8 show the lid 4 that forms part of the casing 1. As shown in Figure 3, when the lid 4 is detached from the base 2, the second compartment 7 is open to the environment, so that a user can easily access the second compartment 7.

The lid 4 can be detachably coupled to the base 2. For example, the lid 4 comprises holes 18 for the passage of screws, and the base 2 comprises threaded holes 19 for the threading of said screws. In this example, the threading of the screws allows the lid 4 to be coupled to the base 2, and the unscrewing of the screws allows the lid 4 to be detached from the base 2. As can be deduced from Figures 1 and 2, the coupling of the lid 4 to the base 2 closes the second compartment 7 to the outside of the casing 1, such that the second compartment 7 is not user-accessible and is protected by the lid 4. The lid 4 separates the second compartment 7 from the neck of an animal wearing the device. This separation is particularly advantageous in those embodiments where the second compartment 7 comprises an electronic component, such as a battery, for example, since the lid 4 makes it possible to minimise the possibility of electrical discharges from the electronic component of the second compartment 7 towards the animal.

The electronic component 5 of the first compartment 6 comprises a wireless communications module for transmitting and receiving data. The wireless communications module comprises a receiver and a transmitter for electromagnetic radiation used in wireless data transmission, for example, one or more antennas. The receiver and/or the transmitter are between the second compartment 7 and the hole 81 in the casing 1. In this way, the second compartment 7 is closer to the hole 82 in the casing 1 than to the hole 81 opposite the hole 82, whereas the receiver and/or the transmitter is closer to the hole 81 than to the hole 82 opposite the hole 81. This arrangement may enable, when the device is attached to the animal, the electronic component 5 to be located higher than the battery and data capture, transmission and/or reception is favoured.

The casing 1 comprises a device orientation indicator 14. The indicator 14 is on the outer surface of the base 2. The indicator 14 comprises arrows, the arrows having a sense of an imaginary straight line that extends from the hole 82 in the casing 1 furthest from a contact 13 to the hole 81 in the casing 1.

The electronic component 5 comprises a positioning apparatus configured to determine the position of the device via satellites and/or wireless communications. In other embodiments (not shown), the device lacks said positioning apparatus. In some of these embodiments, the device comprises a movement and/or position sensor.

The electronic component 5 comprises a temperature sensor for measuring the temperature of the animal wearing the device. In other embodiments (not shown), the physical magnitude measured by the sensor is at least one of: the animal's heart rate, the animal's electroencephalogram, the animal's electrocardiogram, device movement, device position, among others. Although movement and position can be determined with a positioning apparatus, in embodiments where the sensor measures one or both of them, it preferably does so with an inertial measurement sensor (e.g., with an accelerometer, gyroscope and/or magnetometer), or even by processing the communications from the wireless communications module which allow position triangulation to be carried out.

The electronic component 5 comprises one or more storage units and one or more processors, and the measurements are stored in the one or more storage units and can be processed by the one or more processors to generate information from them. The measurements, processed or not, are sent to communication devices via the wireless communications module.

As shown in Figures 2 and 3, the device comprises the contact 13. The contact 13 is on and/or protrudes from the outer surface of the base 2 so as to contact an animal's neck when the animal wears the device. The contact 13 is connected to a sensing component of a sensor so that the sensor can take the measurement. By way of example, if the sensor is a temperature sensor, the contact 13 transmits the animal's temperature from the animal to the sensing component.

As can be deduced from Figures 1, 9 and 11, the cover 3 comprises an outer surface 9 located between the holes 81, 82 in the casing 1, the holes 81, 82 being closer to the outer surface of the base 2 than to the outer surface 9 of the cover 3. The outer surface 9 of the cover 3 is raised with respect to the holes 81, 82 in the casing 1, allowing a strap inserted in the holes 81, 82 to press on a large surface of the cover 3. In this way, it is possible to increase the firmness with which the device is secured to an animal's neck.

As shown in Figures 1 and 2, the holes 81, 82 define a maximum strap width in a first transverse direction T, a second longitudinal direction L perpendicular to the transverse direction T and which runs from the hole 82 to the hole 81, and a third direction H perpendicular to the second longitudinal direction L and to the first transverse direction T, wherein the outer surface 9 of the cover 3 defines between the holes 81, 82 an elevation in the third direction H with respect to the holes 81, 82; the elevation being in the sense that goes from the base 2 to the cover 3. In this way, the combination of the holes 81, 82 with the elevation of the outer surface 9 allows a strap inserted in the holes 81, 82 to press on a large surface of the cover 3 in the direction of H according to the sense that runs from the cover 3 towards the base 2, i.e., in the negative sense of direction H. In this way, it is possible to increase the firmness with which the device is secured to an animal's neck.

As seen in Figure 1, the dimension of the casing 1 in the second longitudinal direction L is greater than the dimension of the casing 1 in the first transverse direction T and the dimension of the casing 1 in the third direction H.

As can be deduced from Figures 6 and 9, a portion of the walls of the holes 81, 82 in the casing 1 is in the base 2, whereas the rest of the walls of the holes 81, 82 in the casing 1 is in the cover 3. Thus, as the base 2 is coupled to the cover 3, the portions of the walls of the holes 81, 82 are joined to form the walls of the holes 81, 82. In this way, the use of the casing as a guide and attachment axis of a strap is enabled.

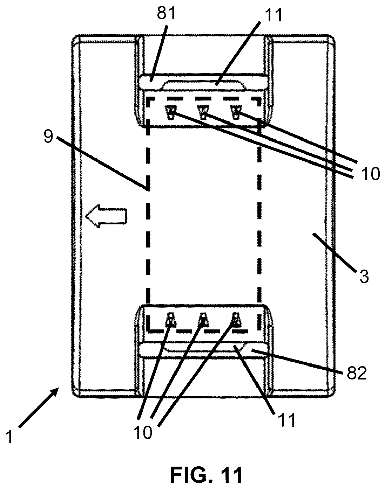

As shown in Figures 6 and 11, the casing 1, and more specifically the base 2, comprises a tab 11 on a wall of each hole 81, 82 in the casing 1. Each tab 11 is on the wall of the hole 81, 82 closer to the central area of the base 2 than to the end of the base 2. Each of the tabs 11 defines a central area of the corresponding hole 81, 82 and enables the position of the device to be kept fixed when attached to the animal. In this way, each hole 81, 82 has a U-shaped section, wherein the parallel ends of the U-shape are separated by the tab 11. The absence of a tab 11 at these ends causes the thickness, i.e., the dimension in the second longitudinal direction L, of the section at the ends of the hole 81 to be thinner than the thickness of the central area of the hole 81.

As shown in Figures 2 and 3, the casing 1 comprises projections 12 located near a wall of each of the holes 81, 82 or on a wall of the holes 81, 82. The projections 12 are located adjacent to a wall of the corresponding hole 81, 82 closer to an end of the base 2 than to a central area of the base 2. The location of the projections 12 is adjacent to a wall of the hole 82 opposite the wall of the tab 11 of the same hole 82. The projections 12 are oriented towards the outer surface of the base 2, i.e., in the negative sense of the third direction H. Although in other embodiments (not shown) the outer surface of the base 2 comprises the projections 12.

As can be deduced from Figures 1, 10 and 11, the outer surface 9 of the cover 3 comprises projections 10. The projections 10 have a maximum dimension of at least 2.0 mm. In particular, the device comprises three projections 10 closer to a first tab of the tabs 11 than to the other of the tabs 11, and three other projections 10 closer to the other tab of the tabs than to the first tab of the tabs 11.

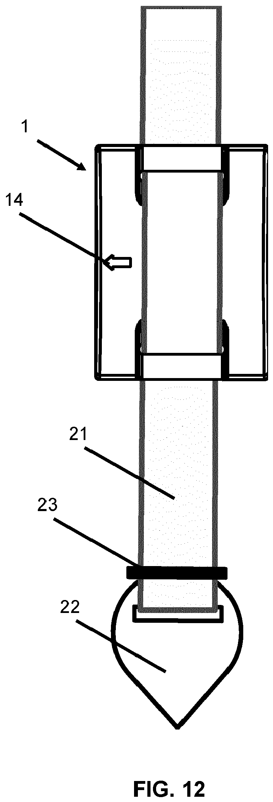

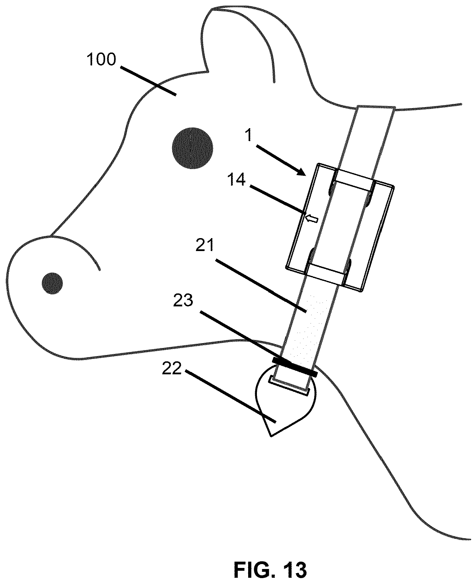

Figures 12 and 13 show a kit comprising the wearable device worn by an animal and a strap 21; Figure 13 shows the kit attached to an animal 100. The strap 21 is inserted in the holes 81, 82 in the casing 1. When the device is worn by an animal, the strap 21 is in contact with the outer surface 9 of the cover 3. In this way, when tightening the strap 21, the strap 21 presses against the outer surface 9 of the cover 3. This makes it possible to increase the firmness of attachment between the device and the animal's neck. Furthermore, the presence of the strap 21 on the outer surface 9 of the cover 3 reinforces the resistance of the outer surface 9 of the cover 3 to blows.

Continuing with Figure 12, the kit comprises a counterweight 22 and, preferably, a buckle 23 coupled to the strap 21. The mass of the counterweight 22 is greater than the mass of the device. The strap 21 is inserted in a hole in the counterweight 22 and is secured by the buckle 23. The placement of the counterweight 22 and buckle 23 at the lower portion of the animal's neck minimises the chances that the device attached to the animal by the strap 21 slips down to a lower portion of the animal's neck. The device of the kit may include an indicator 14 that indicates, for example, a preferred orientation with which to secure the kit to the animal; in this way, it is possible, for example, to improve data transmission while the animal is grazing by reducing possible interference or impedance mismatches of the antenna due to the animal.

The device can be attached to an animal's neck, preferably an animal whose head has a larger cross section than a cross section of the neck, such that this change in section minimises the chances of the strap 21 slipping from the neck towards the animal's head protruding from the neck. In some embodiments, as can be seen in Figure 13, the device can be attached to the neck of an animal 100, such as, but not limited to, cattle, sheep, horses and/or goats.

In this text, the word "comprises" and its variants (such as "comprising", etc.) should not be understood in an exclusive sense, i.e., they do not exclude the possibility of that which is described including other elements, steps, etc.

Moreover, the invention is not limited to the specific embodiments described herein, but rather encompasses, for example, the variations that a person with average skill in the art could carry out (for example, in terms of the choice of materials, dimensions, components, design, etc.), within the scope of what may be deduced from the claims.

## Claims

1. A wearable device worn by an animal, the device comprising a protective casing (1) for an electronic component (5), the casing (1) comprising a base (2) and a cover (3) that can be coupled to the base (2), the casing (1) defining a first compartment (6) adapted to house the electronic component (5), the first compartment (6) being delimited by the base (2) and by the cover (3) and the first compartment (6) being closed to the outside of the casing (1); the base (2) comprising an outer surface adapted to remain in contact with an animal's neck when the device is worn; the casing (1) comprising holes (81, 82) for the passage of a strap; **characterised in that** the casing (1) comprises a second compartment (7) for housing a battery and **in that** the casing (1) comprises a lid (4) of the second compartment (7) that can be detachably coupled to the base (2) and/or to the cover (3) such that the coupling of the lid (4) causes the closure of the second compartment (7) to the outside of the casing (1).

2. The device of claim 1, wherein an outer surface (9) of the cover (3) is between the holes (81, 82); the holes (81, 82) being closer to the outer surface of the base (2) than to the outer surface (9) of the cover (3).

3. The device of any one of the preceding claims, wherein the first compartment (6) is closed to the second compartment (7).

4. The device of any one of the preceding claims, wherein the second compartment (7) is between the outer surface of the base (2) and the first compartment (6).

5. The device of any one of the preceding claims, wherein the lid (4) can be detachably coupled to the outer surface of the base (2); the second compartment (7) being delimited by the base (2) and by the lid (4).

6. The device of any one of the preceding claims, comprising at least one electronic component (5) housed in the first compartment (6).

7. The device of claim 6, comprising a battery for powering the at least one electronic component (5); the battery being housed in the second compartment (7).

8. The device of any one of claims 6 to 7, wherein the electronic component is electrically and/or electronically connected to a sensor; the sensor comprising a component sensitive to a physical magnitude measurable by the sensor; the sensing component comprising a contact (13) on the outer surface of the base (2).

9. The device of any one of the preceding claims, wherein the casing (1) comprises a device orientation indicator (14); the indicator (14) being on an outer surface of the casing (1).

10. The device of any one of the preceding claims, wherein the electronic component comprises a positioning apparatus configured to determine the position of the device via satellites and/or wireless communications.

11. The device of any one of the preceding claims, wherein the holes (81, 82) are closer to ends of the base (2) than to the central area of the base (2).

12. The device of any one of the preceding claims, comprising a tab (11) in a central area of a wall of a hole (81, 82), the tab (11) defining a central area of the hole (81, 82), the central area being thinner than the thickness of the hole (81, 82) at ends of the hole (81, 82).

13. The device of claim 12, comprising projections (12) adjacent to a wall of a hole (81, 82) that is opposite the wall of the same hole (81, 82) where the tab (11) is located; the projections (12) being oriented in a direction and sense of an imaginary straight line that extends from a point on the outer surface (9) of the cover (3) to a point on the outer surface of the base (2).

14. A kit comprising the device of any one of the preceding claims and a strap for attaching the device to an animal's neck, the strap being insertable in the holes (81, 82) and/or the strap being inserted in the holes (81, 82).

15. The kit of claim 14, comprising a counterweight (22) coupled to the strap (21) and a buckle (23) coupled to the strap (21), the mass of the counterweight (22) being greater than the mass of the device.
